# EUROPEAN PATENT APPLICATION

(11) **EP 3 629 259 A1**
(43) Date of publication of application: **01.04.2020**
(21) Application number: 19196702.5
(22) Date of filing: 11.09.2019
(51) Int. Cl.: G06Q 10/02, G06Q 10/04, G06Q 50/30

(54) **AUTOMOBILE OPERATION CONTROL SYSTEM**

(30) Priority: 28.09.2018 JP 2018184150
(71) Applicant: Mazda Motor Corporation, Aki-gun, Hiroshima 730-8670 (JP)
(72) Inventor: YOSHIDA, Shinichiro, Aki-gun, Hiroshima 730-8670 (JP); OKAMURA, Masashi, Aki-gun, Hiroshima 730-8670 (JP); OKADA, Yuki, Aki-gun, Hiroshima 730-8670 (JP); NISHIMURA, Kazuma, Aki-gun, Hiroshima 730-8670 (JP); KAMIHACHI, Toshio, Aki-gun, Hiroshima 730-8670 (JP)
(74) Representative: Müller-Boré & Partner Patentanwälte PartG mbB

(57) **Abstract**

An automobile operation control system is provided, which provides a service of a fixed-time and fixed-route operation and an on-demand operation using an operation vehicle to multiple users who reside in a given geographical area. The system includes an operation control device managed by an operation administrator and comprising a processor. The device is configured to receive a boarding reservation for the the on-demand operation from a first user of the multiple users. The devices suspends, in response to an acceptance of the reservation for the on-demand operation of which a second operation time window is within a given threshold from a first operation time window of the fixed-time fixed-route operation, the fixed-time and fixed-route operation scheduled to be operated in the first operation time window, when a given condition is satisfied.

## Description

### TECHNICAL FIELD

The present disclosure relates to an automobile operation control system, a method of operating a vehicle and to a computer program product.

### BACKGROUND OF THE DISCLOSURE

In recent years, as a kind of carsharing, offering of an operation service in which an automobile owned by an individual driver is used as an operation vehicle, and the operation vehicle being driven by the same driver is provided to many and unspecified users who need a ride, increases. When offering such a service over a wide area, it is common to prepare a large number of operation vehicles to be used for the operation service.

JP 2014 - 238 831 A proposes a technique of selecting a suitable operation vehicle for a boarding request from a large number of operation vehicles. JP 2016 - 085 734 A proposes a technique of improving a benefit of a service provider or a satisfaction of a user upon selecting the operation vehicle.

Meanwhile, in rural areas, there are many problems, such as aging of residents and a decrease in population, and especially in trafficless areas, those who are transportation constrained, who have limited transportation options, are deprived of transportation to go to hospitals, shopping, etc. Therefore, as a means of transportation indispensable for those people in the traffic blank areas, an onerous transportation has drawn attention in which automobiles owned by residents are used as the operation vehicles, and drivers who own the automobiles are used as operators of the operation vehicles. Such an onerous transportation not only offers the indispensable means of transportation to the trafficless areas, but also has a possibility to activate the area through keeping and creating rich areas, and therefore, an effective use of the onerous transportation is demanded.

In the onerous transportation in the trafficless areas, it is possible to perform a fixed-time and fixed-route operation as its fundamental operation service. The fixed-time and fixed-route operation corresponds to the operation of a fixed-route bus, and the operation is such that an automobile operates along a predefined route on a predefined time schedule. In addition to the fixed-time and fixed-route operation, in order to improve the convenience for transportation, an on-demand operation (corresponding to a taxi) may be performed in which the resident can select freely the operation schedule, the departing location, the destination, the transit location(s), etc.

When performing both the fixed-time and fixed-route operation and the on-demand operation, a situation where the fixed-time and fixed-route operation and the on-demand operation overlap may often occur. That is, an on-demand operation may be requested for almost the same time window as the time window of the fixed-time and fixed-route operation, and the destination of the on-demand operation may be the same as the destination of the fixed-time and fixed-route operation.

In such a case, although it is of course possible to perform both the fixed-time and fixed-route operation and the on-demand operation, some measures are desired in terms of reducing the operation loads, such as the paycheck to the driver and the operation control expenses.

There is a conflict between a proper transportation and a reduction of pollution and energy consumption. In a case in which there are many scheduled operating vehicles, a proper transportation can be provided. However, in this case the capacity of the vehicles is not fully used and there are many empty drives which lead to unnecessary energy consumption and high pollution.

On the other hand, a reduction of scheduled operating vehicles leads to bad transportation possibilities.

Accordingly, there exists a need of improving this situation and to provide proper transportation possibilities and on the other hand, save energy and reduce pollution.

### SUMMARY OF THE DISCLOSURE

The present disclosure is made in view of the above situations, and one purpose thereof is to provide an automobile operation control system which is capable of reducing an operation load and thus an energy consumption and a pollution, when performing both a fixed-time and fixed-route operation and an on-demand operation.
This object is achieved by the features of the independent claims. Further developments are defined in the dependent claims.

According to one aspect of the present disclosure, an automobile operation control system is provided, which provides a service of a fixed-time and fixed-route operation and an on-demand operation using an operation vehicle to multiple users who reside in a given geographical area. The automobile operation control system includes an operation control device managed by an operation administrator and comprising a processor. The operation control device may be configured to receive a boarding reservation for the on-demand operation from a first user of the multiple users. The operation control device may be configured to suspend, in response to an acceptance of the boarding reservation for the on-demand operation of which a second operation time window is within a given threshold from a first operation time window of the fixed-time and fixed-route operation, the fixed-time and fixed-route operation scheduled to be operated in the first operation time window, when a given condition is satisfied.

According to this configuration, the fixed-time and fixed-route operation scheduled to be operated in the first time window close to the reserved on-demand operation can suitably be suspended, which can reduce the operation load, and thus save energy and reduce emissions. In addition, since the given condition is provided in order to suspend the fixed-time and fixed-route operation, a situation such that the fixed-time and fixed-route operation is suspended needlessly can be prevented, and a convenience of a user who wants to use the fixed-time and fixed-route operation can sufficiently be secured.

When accepting the boarding reservation for the on-demand operation, the operation control device may accept the boarding reservation including information on whether the first user permits a shared ride or not. The given condition may include at least the first user permitting the shared ride. In this case, while the intention of the user who made the boarding reservation is reflected regarding whether the shared ride is permitted, the needless suspension of the fixed-time and fixed-route operation caused by the on-demand operation can be prevented.

The operation control device may use the reserved on-demand operation also as a replacement operation of the suspended fixed-time and fixed-route operation. In this case, by using the on-demand operation also as a replacement operation of the suspended fixed-time and fixed-route operation, while a convenience of transportation can sufficiently be secured entirely, the operation loadcan be reduced, so as to save energy and reduce emissions.

When determining a traveling course of the reserved on-demand operation, the operation control device may calculate a required time difference that is a time difference between a time required for the reserved on-demand operation and a time required for the fixed-time and fixed-route operation to be suspended if the operation vehicle travels on the determined traveling course. The given condition may include the required time difference being less than a given first time difference. In such a case where the on-demand operation is also used as a replacement operation of the suspended fixed-time and fixed-route operation, a situation where the time required for the operation becomes longer unnecessarily can be prevented.

When determining a traveling course of the reserved on-demand operation, the operation control device may calculate an estimated time-of-arrival difference between an estimated time of arrival at a destination of the on-demand operation and an estimated time of arrival at a destination of the fixed-time and fixed-route operation to be suspended if the operation vehicle travels on the determined traveling course. The given condition may include the estimated time-of-arrival difference being less than a given second time difference. In such a case where the on-demand operation is also used as a replacement operation of the suspended fixed-time and fixed-route operation, a situation such that the time of arrival at the destination is changed greatly from that of the fixed-time and fixed-route operation can be prevented.

The system may further include multiple user terminals communicatable with the operation control device, each including a processor, and each corresponding to a respective user of the multiple users. The operation control device may be further configured to inquire the user terminal corresponding to the first user, when the boarding reservation for the on-demand operation is accepted, whether a shared ride of the reserved on-demand operation is permitted, and receive a result of the inquiry. The operation control device may suspend the fixed-time and fixed-route operation scheduled in the first operation time window on a condition that a second user who requests to share the ride of the reserved on-demand operation exists. In this case, since the number of opportunities for shared rides of the on-demand operation is increased, i.e., the number of users who use the fixed-time and fixed-route operation is reduced by the number of the increased shared rides, it is desirable in increasing the number of suspensions of the fixed-time and fixed-route operation. Especially in depopulated districts, since the users in a residential area often want to go to substantially the same destinations as other users, the number of suspensions of the fixed-time and fixed-route operation can be increased by using the shared ride.

When inquiring whether the shared ride of the on-demand operation is permitted, the operation control device may inform the first user, via the corresponding user terminal, information on an operation time and the traveling course of the on-demand operation. In this case, by informing the traveling course in addition to the operation time, the users who want to share the ride increase, and thus, it is desirable in increasing the number of suspensions of the fixed-time and fixed-route operation by the increase amount of shared rides. Thus, a further energy saving and reduction of pollution can be achieved.

When the second user has made a boarding reservation for the fixed-time and fixed-route operation, the operation control device may preferentially inquire the user terminal corresponding to the second user whether the second user wants to share the ride, before inquiring other user terminals. In this case, the user who scheduled to use the fixed-time and fixed-route operation is positively guided to the on-demand operation, and thus, it is desirable in increasing the number of suspensions of the fixed-time and fixed-route operation.

The given condition may include a sum total of a required time from a first house of the first user to a first stop for the fixed-time and fixed-route operation located nearest to the first house, and a required time from a second house of the second user to a second stop for the fixed-time and fixed-route operation located nearest to the second house being more than a given time. In this case, the user who takes a longer time from their house to their stop is guided to the on-demand operation, and thus, it is desirable in increasing the number of suspensions of the fixed-time and fixed-route operation.

The given condition may include a sum total of a distance from a first house of the first user to a first stop for the fixed-time and fixed-route operation located nearest to the first house, and a distance from a second house of the second user to a second stop for the fixed-time and fixed-route operation located nearest to the house being more than a given distance. In this case, the user whose distance from their house to their stop is longer is guided to the on-demand operation, and thus, it is desirable in increasing the number of suspensions of the fixed-time and fixed-route operation.

The given condition may include a direction of a destination of the reserved on-demand operation being substantially in agreement with a direction of a destination of the fixed-time and fixed-route operation to be suspended. In this case, the on-demand operation can be substantially the same as the fixed-time and fixed-route operation to be suspended.

The system may further include a plurality of driver terminals communicatable with the operation control device, each comprising a processor, and each corresponding to a respective one of a plurality of drivers in charge of driving at least the fixed-time and fixed-route operation. The operation control device may be further configured to inform, via the corresponding driver terminal of a driver of the plurality of drivers who is scheduled to be in charge of driving the fixed-time and fixed-route operation to be suspended, that the fixed-time and fixed-route operation is suspended. In this case, the driver who is scheduled to be in charge of the fixed-time and fixed-route operation to be suspended can be informed in advance that he/she is no longer needed to drive.

According to a further aspect, there is provided a method of operating a vehicle, comprising the steps of:
providing a service of a fixed-time and fixed-route operation and an on-demand operation using an operation vehicle in particular to multiple users who reside in a given geographical area,
receiving a boarding reservation for the on-demand operation from a first user of the multiple users, and
suspending, in response to an acceptance of the boarding reservation for the on-demand operation of which a second operation time window is within a given threshold from a first operation time window of the fixed-time and fixed-route operation, the fixed-time and fixed-route operation scheduled to be operated in the first operation time window, when a given condition is satisfied.

Preferably, when accepting the boarding reservation for the on-demand operation, the boarding reservation includes information on whether the first user permits a shared ride or not, and
wherein the given condition includes at least the permit of the first user for the shared ride, and/or
the reserved on-demand operation is also used as a replacement operation of the suspended fixed-time and fixed-route operation.

According to a still further aspect, there is provided a computer program product comprising computer-readable instructions, which when loaded and executed on a suitable system, can perform the steps of any of the above-mentiond methods.

### BRIEF DESCRIPTION OF DRAWINGS

Fig. 1 is a view illustrating one example of a route of a fixed-time and fixed-route operation.
Fig. 2 is a view illustrating one example of an on-demand operation.
Fig. 3 is a view illustrating one example of a system configuration according to the present disclosure.
Fig. 4 is a view illustrating one example of a display screen of an in-vehicle terminal.
Fig. 5 is a flowchart illustrating one example of a control for performing various registrations.
Fig. 6 is a flowchart illustrating one example of a control for registering a driver who is available for the operation.
Fig. 7 is a flowchart illustrating one example of a control accompanying an operation of the in-vehicle terminal.
Fig. 8 is a flowchart illustrating one example of a control accompanying an acceptance of a boarding reservation of the fixed-time and fixed-route operation.
Fig. 9 is a flowchart illustrating one example of a control accompanying an acceptance of a boarding reservation of the on-demand operation.
Fig. 10 is a flowchart illustrating one example of a control related to a shared ride accompanying the on-demand operation.
Fig. 11 is a flowchart illustrating a first example of a control for suspending the fixed-time and fixed-route operation accompanying the on-demand operation.
Fig. 12 is a flowchart illustrating a second example of the control for suspending the fixed-time and fixed-route operation accompanying the on-demand operation.
Fig. 13 is a view illustrating one example of a display screen of a user terminal when making the boarding reservation for the fixed-time and fixed-route operation.
Fig. 14 is a view illustrating one example of a display screen of the user terminal when making a boarding reservation for the fixed-time and fixed-route operation in a case of suspending the fixed-time and fixed-route operation accompanying the on-demand operation.
Fig. 15 is a view illustrating a state where the screen is switched to the content indicating the details of the on-demand operation from the screen of Fig. 14.

### DETAILED DESCRIPTION OF THE DISCLOSURE

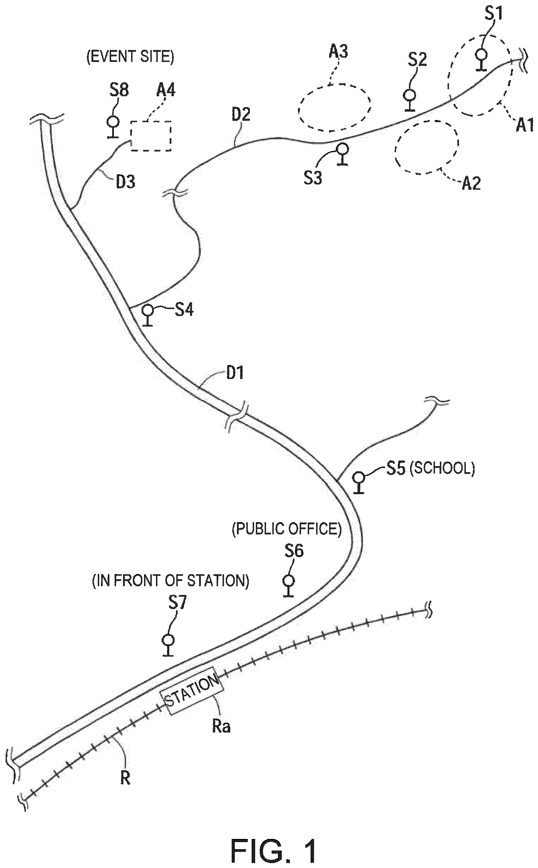

Fig. 1 illustrates one example of a route along which a fixed-time and fixed-route operation is carried out. In this figure, D1 is a road with one lane for each direction (two lanes). The road D1 passes by a given station Ra of a railroad line R, and is a main road in this area. The circumference of the station Ra serves as the only shopping or business quarter in this area, where medical facilities, such as hospitals and dentists, commercial establishments and amusement facilities, such as super markets, convenience stores, and karaoke lounges exist in addition to public institutions, such as public offices and schools.

The road D1 is connected to roads D2 and D3 at locations distant from the station Ra. The roads D2 and D3 are local roads of one lane where two-way traffic is possible. The area along the roads D2 and D3 are located in a mountain slope, and most of the perimeter is a remote place where mountains and hills exist.

At locations along the road D2 and far away from the road D1, a plurality of villages A1-A3 exist. The villages A1-A3 are rural villages away from the station Ra by about 10 km or more. The road D3 is a dead end where an event site (public square) A4 for residents of the villages A1-A3 gathering exists.

Although the total number of residents who reside in the villages A1-A3 is about several hundreds, a proportion of elderly people is large, and therefore, there are many elderly people who cannot drive an automobile. In addition, any operation of the fixed-route bus is not carried out on the road D2 (i.e., for the residents of the villages A1-A3).

In order to plan the public transportation for the residents of the villages A1-A3, a fixed-time and fixed-route operation and an on-demand operation are to be performed with the cooperation of the residents. The fixed-time and fixed-route operation is to operate vehicles on a predefined route on a schedule. Vehicle stops for the fixed-time and fixed-route operation are indicated as S1-S7. The stop S1 is a departing location, and it is for the residents of the village A1. The stop S2 is for the residents of the village A2. The stop S3 is for the residents of the village A3.

The stop S4 is set at a location of an intersection between the main road D1 and the road D2. The stop S5 is set near a location of an elementary school or a junior high school. The stop S6 is set at a location near the public office. The stop S7 is a terminal location of the fixed-time and fixed-route operation, and is set near the station Ra. Thus, the route of the fixed-time and fixed-route operation is set as a course from the stop S1 to the terminal location S7 via S2, S3, S4, S5, and S6. A returning route is to follow the same course in the opposite direction. Note that the number of services of the fixed-time and fixed-route operation is five, such as 2 round trips in the morning, 1 round trip in the daytime, and 2 round trips in the evening. Note that the number of operation vehicles used for the fixed-time and fixed-route operation which depart at the same time is not limited to one vehicle, but a plurality of operation vehicles may be used if there are too many people who want to the ride (i.e., there is a possibility that a plurality of operation vehicles operate for the same trip).

As a modification of the fixed-time and fixed-route operation, an extra operation (extra trip) may be performed suitably. This extra operation is performed, for example, only when an event (e.g., a Bon festival dance, a firework display, an Imoni party, etc.) is held at the event site A4. "Imoni" is a traditional regional specialty of taro and meat soup in the Tohoku region of Japan. The course of this extra operation is set as a route from the stop S1 and to reach a stop S8 via S2, S3, and S4 (a return trip is in the opposite direction). The extra operation is a trip which leaves the stop S1 on a scheduled time on the event date.

As for the operation vehicles which perform the fixed-time and fixed-route operation including the extra operation(s) and the on-demand operation, private automobiles owned by the residents of the villages A1-A3, as well as dedicated vehicles for which the service provider is in charge of the management according to assistances and contributions from a self-governing body or enterprises, are used. The number of operation vehicles prepared is at least two, and preferably ten or more.

The drivers who operate the operation vehicles are selected from the residents of the villages A1-A3. A prerequisite for being the drivers is to take a given class (e.g., a class for about half a day or one day). That is, the class curriculum includes, for example, knowledge and practical skills about the safe driving, the method of assisting a passenger (especially, an elderly person or a small child) to get on and off the operation vehicle, and the knowledge and handling of the operation control required for the driver. The driver who finished the class is registered as an operator of the operation vehicle (this registration of a driver will be described later in detail).

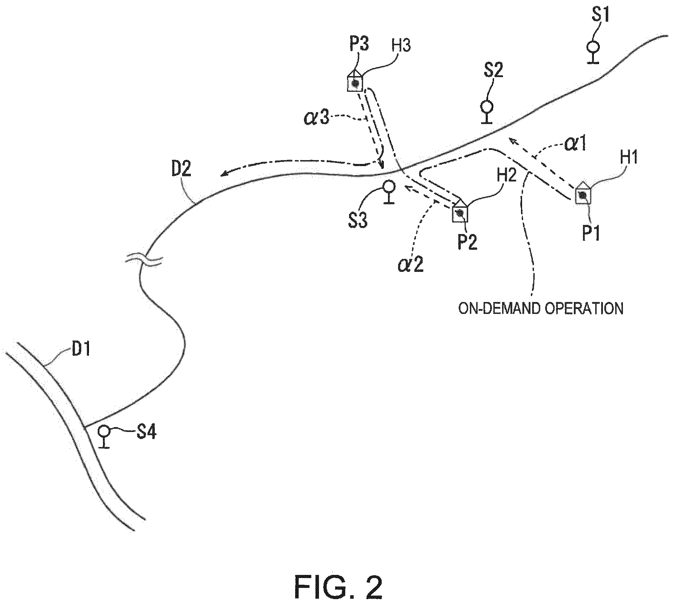

Fig. 2 illustrates a case when the on-demand operation is performed. In this figure, H1 is a house of a passenger (user) P1 who made a boarding reservation for the on-demand operation, and H2 and H3 are houses of passengers (users) P2, P3 who want to share the ride of (an operation vehicle of) the reserved on-demand operation. In the on-demand operation, the passenger can freely select the departing location, the destination, and the course according as he/she wishes. In Fig. 2, a case where a location of (near) the house of the passenger P1 who made a boarding reservation is set as the departing location, and the vehicle goes toward the stop S4 via the location near the house of the passenger P2 and the location near the house of the passenger P3 is illustrated.

A stop closest to the passenger P1 is S2, and a path a1 on foot from the house of the passenger P1 to the stop S2 is illustrated by a broken line. Similarly, a stop closest to the passenger P2 is S3, and a path a2 on foot from the house of the passenger P2 to the stop S3 is illustrated by a broken line. A stop closest to the passenger P3 is also S3, and a path a3 on foot from the house of the passenger P3 to the stop S3 is illustrated by a broken line.

For the passengers P1-P3, if the time or distance to the nearby stop is long, the walk to the stop becomes burdensome. Therefore, the on-demand operation may be requested to avoid the walk to the stop. Moreover, the cases where the on-demand operation is requested include the passenger carrying a large (heavy) item, the passenger moving to a place distant from all the stops, and the passenger having a difficulty in walking because the passenger uses a mobility aid such as a wheelchair, a cane, crutches, etc. Although the price when using the on-demand operation becomes higher than the price of the fixed-time and fixed-route operation, the passenger therefore judges whether to use the fixed-time and fixed-route operation or the on-demand operation, taking the required time and the distance to the stop in consideration. Note that the departing location of the on-demand operation may suitably be selected within a range where the service of the on-demand operation is permitted (allowed), such as a location near the station Ra, or a location near the stop (e.g., S5 or S6).

Here, one example of the fee schedule when using the fixed-time and fixed-route operation or the on-demand operation is described. First, when using the fixed-time and fixed-route operation, the fee is only the amount of money according to the traveling distance, where the fee per unit distance is E1, and the total fee can be calculated as (E1 × traveling distance). On the other hand, the fee of the passenger P1 who first made the boarding reservation for the on-demand operation is set as E2 which is slightly higher than the fee E1 according to the traveling distance, and a fixed base charge EB2 is additionally collected (i.e., the sum total is EB2 + E2 × traveling distance). Further, for the passengers P2 and P3 who want to share the ride of the on-demand operation, only the fee E2 is charged (the base charge EB2 is unnecessary). Thus, the fee when the fixed-time and fixed-route operation is used is the cheapest, the fee when the boarding reservation for the on-demand operation is first made is the most expensive, and the fee when the ride of the on-demand operation is shared is a middle charge therebetween. Of course, the fee schedule described above is one example and may be set suitably.

When sharing the ride of the on-demand operation, there is a merit if the destination of a passenger who wants to share the ride is substantially the same direction as the destination of the passenger who first reserved the on-demand operation. For example, in a case where the destination of the passenger who first reserved the on-demand operation is a location near the stop S6, if the destination of the passenger who wants to share the ride is a location near the stop S7 (a place farther than the stop S6) or a location near the stop S5 (a place closer than the stop S6), a shared ride is advantageous. On the other hand, if the first destination of the passenger who wants to share the ride is in the opposite direction from the second destination of the passenger who first reserved the on-demand operation, or the course to the first destination has to be altered largely on the way, a shared ride is not advantageous.

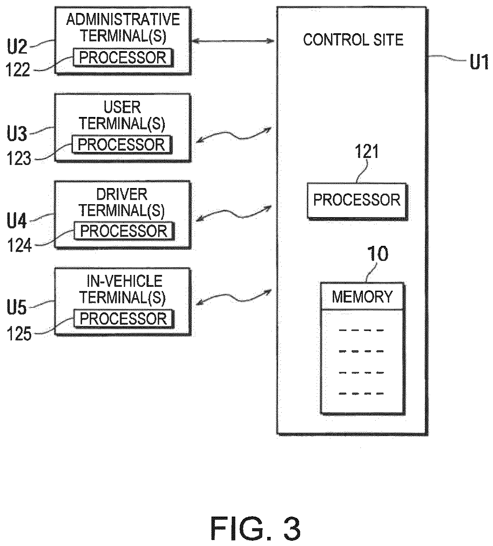

Next, one example of a control system which manages the fixed-time and fixed-route operation and the on-demand operation is described with reference to Fig. 3.

First, U1 is a control site (e.g., a server device as an information processing device) which manages the entire system, and includes a processor 121 such as a CPU, a communication device, and a mass storage device (e.g., memory) 10. The control site U1 is communicatably connected to each of an administrative terminal U2, a user terminal U3, a driver terminal U4, and an in-vehicle terminal U5. Note that the control site U1 and the administrative terminal U2 substantially constitute an operation control device. Moreover, application software for communicating a variety of information with the control site U1 is pre-installed in each of the terminals U2-U5.

Each of the terminals U2-U4 is comprised of an information processing device including a processor 122-124, and includes a display device (output part) and a user interface (input part), in addition to a communication part. Since the administrative terminal U2 is mainly to operate the control site U1, and data inputs and outputs therethrough for the operation control are large, it is desirable to be comprised of a high-end personal computer. Although a sole administrative terminal U2 can be installed, for example, at the public office, a plurality of administrative terminals U2 may also be prepared and they are respectively installed in the villages A1-A3 (however, when one of the administrative terminals U2 is used, other administrative terminals U2 are desirably disabled). Furthermore, the control site U2 may be communicable with multiple user terminals U3, driver terminals U4, and in-vehicle terminals U5.

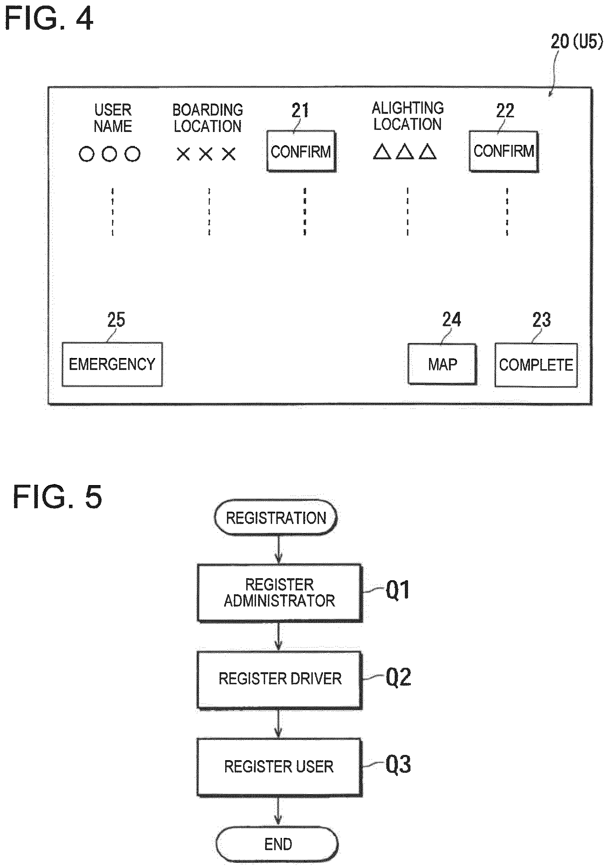

On the other hand, for the user terminal U3 and the driver terminal U4, a personal computer, a smartphone, or a tablet type personal computer may be used. As illustrated in Fig. 4, the in-vehicle terminal U5 includes a display device (not illustrated) provided to a location easily viewable by a driver, which displays a display screen 20. The in-vehicle terminal U5 is to perform various kinds of information exchanges between the control site U1 (an administrator who operates the administrative terminal U2) and a driver who operates the operation vehicle, as will be described later. Moreover, the in-vehicle terminal U5 automatically transmits location information on the operation vehicle to the control site U1. Note that the user terminal U3 may be, instead of the information processing device such as the smartphone, a device which is capable of communicating with the administrator of the administrative terminal U2, such as a telephone (for elderly people who are not adept in operating computer-type apparatuses well).

Fig. 4 illustrates one example of the display screen 20 of the display device which constitutes a part of the in-vehicle terminal U5. In Fig. 4, the display screen is substantially the same for the fixed-time and fixed-route operation and the on-demand operation. The contents displayed on the display screen 20 include a user's name (name of passenger), a boarding location, and an alighting location. If a plurality of passengers exist, similar contents are displayed below in subsequent rows. The passengers' names are sorted from top to bottom, in an ascending order of the distance to the boarding location from the departing location. Note that the names of the boarding location and the alighting location are the names of the stops in the fixed-time and fixed-route operation. However, in the on-demand operation, particular location names indicative of the boarding location and the alighting location are used according to the request of a passenger.

The display screen 20 is displayed on the display device preferably of a touch-panel type. When a certain passenger "OOO" gets on at a boarding location, a driver touches a boarding confirmation switch 21 in the display screen 20. Then, information on the certain passenger "OOO" having boarded the vehicle is transmitted to the control site U1, and is stored therein. Similarly, when the certain passenger "OOO" gets off at an alighting location, the driver touches an alighting confirmation switch 22 in the display screen 20. Then, information on the certain passenger "OOO" having gotten off is transmitted to the control site U1, and is stored therein. Similar operations are performed for the boarding and the alighting of other users.

When all the users have gotten off, the driver touches a completion switch 23 displayed in the display screen 20. Then, information indicative of the operation being finished is transmitted to the control site U1, and is stored therein. When the driver touches a switch 24 displayed in the display screen 20, for requesting a map to be displayed, a traveling course is displayed. Since the possibility that display of the traveling course is needed is high, especially upon the on-demand operation, the map is displayed and a traveling course is indicated by a one-dot chain line as illustrated in Fig. 2 (alternatively or additionally, it may be desirable for the traveling course to be displayed in a different color, similar to the route guidance course displayed in a navigation device, for example).

When the driver touches an emergency switch 25 displayed in the display screen 20, the administrative terminal U2 (or, the administrator who operates the administrative terminal U2) is informed of an occurrence of an emergency situation through the control site U1. Therefore, between the driver and the administrator, an information exchange for dealing with the emergency situation is performed.

Next, one example of a procedure of the operation control performed by the control site U1 and the administrative terminal U2 is described with reference to flowcharts illustrated in Figs. 5 to 12.

First, Fig. 5 illustrates a case where various kinds of registrations are performed. That is, at Q1, one operates the administrative terminal U2 to register himself/herself as an administrator. The administrator is selected, for example, by recommendations, from the personnel of the public office and the residents of the villages A1-A3, and it is desirable to register as many people as possible. The administrator registration requires, for example, a name, address, age, sex, telephone number, etc. Note that the administrator must take the given class and should fully understand the handling of this system, as described above. Note that in order to prevent the administrative terminal U2 from being operated unintentionally, an ID and a password are assigned to each administrator, and thereby the administrative terminal U2 cannot be operated unless the ID and password are entered.

At Q2, the administrator then operates the administrative terminal U2 to register a driver who operates the operation vehicle. In this registration, information such as a name, address, age, sex, telephone number, classification of the operation vehicle to be operated, expiration date of a driver's license, and attended date of the class are registered. Upon this registration, information of whether the operation of which the driver can be in charge is only the fixed-time and fixed-route operation, or only the on-demand operation, or both the fixed-time and fixed-route operation and the on-demand operation, is further registered according to a request of the driver.

At Q3, the administrator then operates the administrative terminal U2 to register a user. This is a registration of a person who becomes a passenger of the operation vehicle (a membership registration of the user). In this registration, for example, a name, address, age, sex, and telephone number, as well as a name of, a required time, and a distance to a nearby stop from the user's house are registered. The registered information is stored in the memory 10 of the control site U1 as a database.

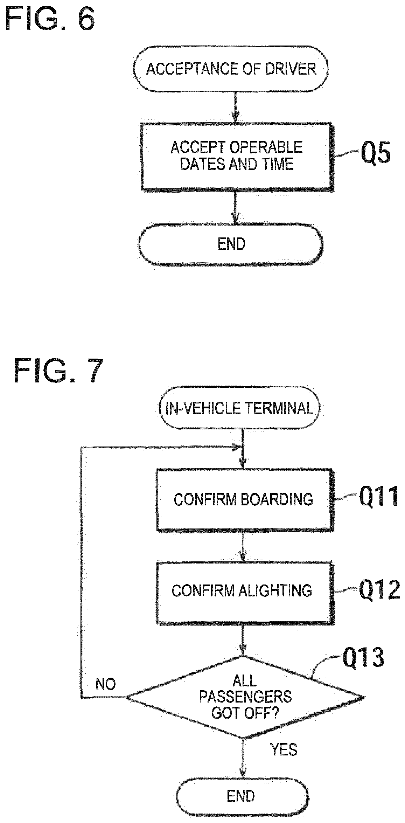

Fig. 6 illustrates processing to accept the driver who can be in charge of the operation of the operation vehicle. That is, for example, for the next month, the driver operates the driver terminal U4 or the administrator operates the administrative terminal U2 to register to the control site U1 (store in the memory 10) dates and time windows for which the driver is available for the operation at Q5. A change and a cancelation are possible for the date and the time window available for the operation. Note that the registration of the date and the time window is also possible by a telephone call or paperwork, and in this case, the administrator accepts the driver's registration using the administrative terminal U2.

Fig. 7 illustrates processing of an operating state performed by the control site U1 corresponding to operation using the in-vehicle terminal U5. That is, at Q11, a confirmation of boarding is performed by the driver operating the switch 21 illustrated in Fig. 4. By operating the switch 22 illustrated in Fig. 4, the confirmation of alighting is performed at Q12. Then, at Q13, by operating the switch 23 illustrated in Fig. 4, it is confirmed that it is the completion of the operation in which all passengers got off. The situation of the operation vehicle which currently operates can be learned by the processing of Fig. 7 (this operating state can be confirmed at any time by the administrator operating the administrative terminal U2 and viewing the display screen).

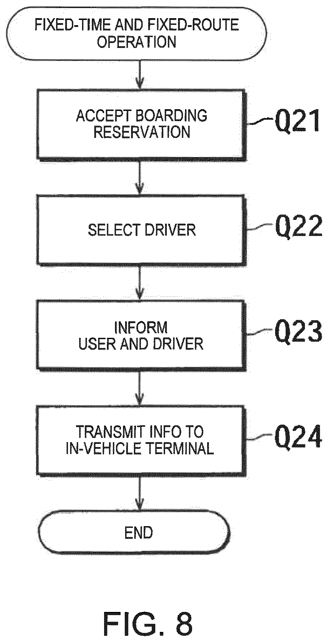

Fig. 8 illustrates processing for performing the fixed-time and fixed-route operation. First, at Q21, a boarding reservation from a user is accepted. The boarding reservation includes inputs of at least a desired date of boarding, a trip name of the fixed-time and fixed-route operation, a boarding location, and an alighting location. Note that although it is assumed here that the boarding reservation is made using the user terminal U3, the boarding reservation may also be accepted by a telephone call or paperwork (in this case, the administrator inputs the contents of the boarding reservation into the control site U1 using the administrative terminal U2). Of course, the contents of the boarding reservation are stored in the memory 10 of the control site U1. Note that as for the boarding reservation, it is desirable to define a deadline of acceptance, such as "before 5:00 p.m. on the day before the fixed-time and fixed-route operation."

At Q22, a driver who is in charge of driving the reserved fixed-time and fixed-route operation is selected. The selection of the driver is carried out by selecting one of the available drivers stored (registered) in the memory 10. Note that the selection of the driver may be selected automatically in sequence from the available drivers, or the administrator may select manually using the administrative terminal U2. Note that since the operation vehicles used by the respective drivers are registered, the operation vehicle to be used is automatically determined in association with the selection of a driver.

At Q23, the passenger who made the boarding reservation (scheduled passenger) is informed of information indicating that the reservation is completed. Moreover, the selected driver is informed of information indicating that the driver is selected for the operation and the contents of the boarding reservation. These pieces of information are conveyed to each of the user terminal U3 and the driver terminal U4. Note that for the confirmation, processing to receive a reply indicating the acceptance of the drive from the selected driver may also be performed (the driver and the operation vehicle are to be certainly secured and the fixed-time and fixed-route operation is ensured).

At Q24, the contents of the boarding reservation (especially, the information on the passenger's name, the boarding location, and the alighting location) are transmitted to the in-vehicle terminal U5 (based on this information, the screen is displayed as illustrated in Fig. 4). Note that the name of the driver who takes charge of the driving may also be transmitted to the in-vehicle terminal U5 (the name of the driver may also be displayed in the display screen 20 of Fig. 4).

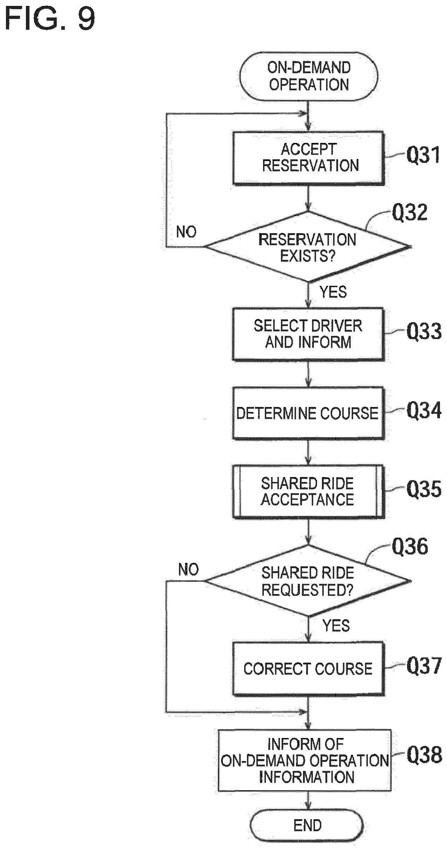

Fig. 9 illustrates processing for performing the on-demand operation. First, at Q31, a boarding reservation for the on-demand operation is accepted from a user. The contents of the accepted boarding reservation include at least a date on which the user wishes to ride a vehicle, a boarding location (departing location), a boarding time, and an alighting location. The boarding reservation may also include information on whether the user wishes (permits) to share the ride. That is, for example, when the user who made the boarding reservation for the on-demand operation wants to go somewhere with his/her family, when the user expects no fellow passenger in terms of privacy, and when the user wants to arrive at the destination faster, the information "no ride share" may be included in the boarding reservation. Note that as long as there is no information indicating "no ride share," it can be automatically determined as "ride share permitted."

Note that although it is assumed that the boarding reservation is performed using the user terminal U3, the boarding reservation may also be accepted by a telephone call or a paperwork (in this case, the administrator inputs the contents of the boarding reservation into the control site U1 using the administrative terminal U2). Of course, the contents of the boarding reservation are stored in the memory 10 of the control site U1. Note that although a deadline for accepting the boarding reservation can be set, for example, until 5:00 p.m. on the day before the boarding date, it is desirable not to set the deadline in order to perform the on-demand operation promptly in emergencies, such as illness or an accident.

At Q32, it is determined whether the boarding reservation for the on-demand operation is accepted. If the determination at Q32 is NO, the processing returns (no on-demand operation). If the determination at Q32 is YES, a driver who takes charge of the operation is selected at Q33 (the operation vehicle to be used is automatically determined according to the selected driver). The selection of the driver is performed by selecting one of the drivers who can be in charge of the operation stored (registered) in the memory 10. The selection of the driver can also be performed automatically in an order from the drivers who are available for the operation. Alternatively, the driver may also be selected manually by the administrator using the administrative terminal U2, and in this case, the selection may be based on a driver specified by the passenger who requested the on-demand operation. The contents of the boarding reservation are informed (transmitted) to the selected driver (the driver terminal U4).

At Q34, the traveling course of the on-demand operation is determined based on the contents of the boarding reservation (especially, the boarding location and the alighting location). At Q35 after Q34, an accepting processing of the shared ride is performed. This processing at Q35 will be described later. Then, at Q36, it is determined whether any passenger requesting the shared ride exists. If the determination at Q36 is YES, the traveling course determined at Q34 is corrected at Q37 according to the boarding location and the alighting location requested by the ride share passenger.

After Q37, or if the determination at Q36 is NO, the traveling course of the on-demand operation is informed (transmitted) to the driver terminal U4 and/or the in-vehicle terminal U5 at Q38, along with the information on the passenger, and the information on the boarding location and the alighting location (the information may also be informed to the user terminal U3 for a confirmation by the ride share passenger).

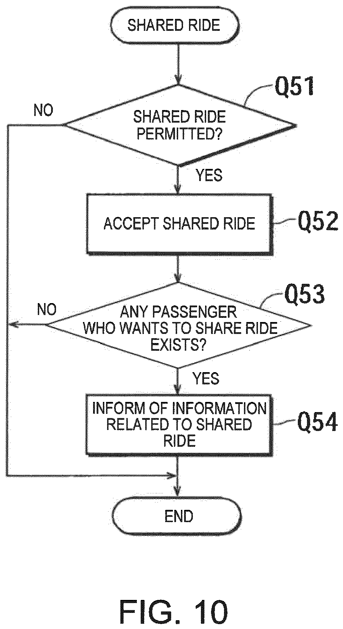

Fig. 10 illustrates the accepting processing of the shared ride at Q35 in Fig. 9. First, at Q51, it is determined whether the passenger (user) who first made the boarding reservation for the on-demand operation permits the shared ride. If the determination at Q51 is YES, the shared ride is accepted at Q52. This acceptance of the shared ride is performed by operating the administrative terminal U2 and informing to the user terminal U3 the date, the time, the boarding location (the departing location), the alighting location (the destination), and the traveling course from the boarding location to the alighting location of the on-demand operation. Then, based on this information, the boarding reservation of the shared ride will be received from the ride share candidate. The ride share candidate specifies his/her desired boarding location and alighting location, and performs the boarding reservation of the shared ride (the boarding reservation of the shared ride is stored in the control site U1).

At Q53, it is determined whether any ride share candidate exists. If the determination at Q53 is YES, for example, by operating the administrative terminal U2, all the users (the user terminals U3) who are going to use the reserved on-demand operation, the assigned driver (the driver terminal U4), and the in-vehicle terminal U5 are informed of the ride share information at Q54. The ride share information includes at least the traveling course, a user name, the boarding location, and the alighting location for every user.

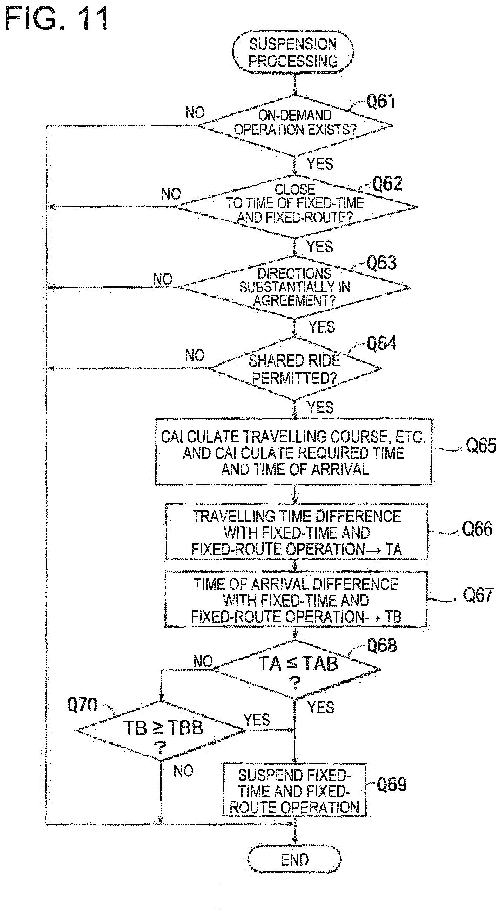

Fig. 11 illustrates processing for suspending the fixed-time and fixed-route operation accompanying an operation of the on-demand operation. First, at Q61, it is determined whether a boarding reservation for the on-demand operation is made. If the determination at Q61 is YES, it is determined whether any fixed-time and fixed-route operation scheduled in a time window within a given threshold from the operation time of the reserved on-demand operation exists at Q62 (in the following description, this fixed-time and fixed-route operation may also be referred to as "fixed-time and fixed-route operation to be suspended"). In detail, for example, it is determined whether the operation time of the fixed-time and fixed-route operation is within a range of 30 minutes before and after the operation time of the on-demand operation.

If the determination at Q62 is YES, it is determined at Q63 whether the direction of the destination of the on-demand operation is substantially in agreement with the direction to the destination of the fixed-time and fixed-route operation to be suspended. In detail, if the destination of the on-demand operation is e.g. within a range of about 2 to about 3 km from the course of the fixed-time and fixed-route operation to be suspended, it can be determined that the directions to the destination are substantially the same. If the determination at Q63 is YES, it is determined at Q64 whether the passenger who first made the boarding reservation for the on-demand operation permits a shared ride. If the determination at Q64 is YES, at Q65, while the traveling course of the on-demand operation is calculated, a required time (estimated required time) to reach the destination of the fixed-time and fixed-route operation to be suspended (e.g., the stop S7 in Fig. 1) along the traveling course, and an estimated time of arrival to the destination (estimated time of arrival) are calculated.

At Q66 after Q65, a first time difference TA which is a time difference between the required time calculated at Q65 and a time required for the fixed-time and fixed-route operation to be suspended is calculated. Then, at Q67, a second time difference TB which is a time difference between the estimated time of arrival calculated at Q65 and an estimated time of arrival of the fixed-time and fixed-route operation to be suspended is calculated.

At Q68 after Q67, it is determined whether (an absolute value of) the first time difference TA is below a given preset time difference TAB (e.g., about 10 to about 20 minutes). If the determination at Q68 is YES, a suspension processing of the fixed-time and fixed-route operation to be suspended (a fixed-time and fixed-route operation scheduled to be operated in an operation time window close to the operation time window of the on-demand operation) is performed.

The suspension processing at Q69 is to replace the fixed-time and fixed-route operation with the on-demand operation. In detail, at Q69, while the information on the fixed-time and fixed-route operation to be suspended, and the information on the alternative on-demand operation are transmitted to the user terminal U3, the same information is transmitted to the driver terminal U4 of the driver who is scheduled to be in charge of the fixed-time and fixed-route operation to be suspended, and to the in-vehicle terminal U5 which is scheduled to operate the fixed-time and fixed-route operation to be suspended. The transmitting processing to the driver terminal U4 and the in-vehicle terminal U5 is a processing to cancel (delete) the information which is necessary for the fixed-time and fixed-route operation. A command for the transmission may be performed automatically from the control site U1, or may be performed by operating the administrative terminal U2. Moreover, in the control site U1, display of the fixed-time and fixed-route operation to be suspended, and the information on the on-demand operation which replaces the fixed-time and fixed-route operation, are maintained in the screen where the boarding reservation is accepted. When each user makes a boarding reservation for the fixed-time and fixed-route operation (when accessing the control site U1), he/she can know the fixed-time and fixed-route operation to be suspended, and can know that the on-demand operation is available as the replacement of the fixed-time and fixed-route operation.

If the determination at Q68 is NO, it is determined at Q70 whether (the absolute value of) the estimated time of arrival difference TB calculated at Q67 is below a given time TBB. If this determination at Q70 is YES, the processing transits to Q69. On the other hand, if the determination at Q70 is NO, the processing ends without performing Q69 (no suspension of the fixed-time and fixed-route operation).

In the example of Fig. 11, although the determinations at Q68 and Q70 are mutually in an OR relationship, they may be in an AND relationship. That is, if the determination at Q68 is YES and also the determination at Q70 at is YES, the processing may shift to Q69.

An example of the processing of Fig. 11 is described below. First, for example, in Figs. 1 and 2, suppose that, when the passenger (user) P1 first makes a boarding reservation for the on-demand operation, and the destination is a location near the stop S6. In addition, supposed that there is a boarding reservation for the fixed-time and fixed-route operation of which the operating time is within a threshold from the operating time of the reserved on-demand operation, and the reservation for the fixed-time and fixed-route operation is to get on at the stop S1 and get off at the stop S7. In this case, the operation vehicle of the on-demand operation departs the location near the passenger P1, once coming out to the road D2, and then goes to the stop S1. The vehicle picks up other passengers at the stop S1, and similarly to the fixed-time and fixed-route operation, moves from the stop S1 and passes through the stops S2, S3, S4, and S5, and drops the passenger who made the boarding reservation for the on-demand operation at a location near the S6, and then goes to the stop S7. Thus, by substituting the fixed-time and fixed-route operation with the on-demand operation, the demand for the fixed-time and fixed-route operation is satisfied, and the demand for the on-demand operation is also satisfied. The example of Fig. 11 becomes suitable when the boarding reservation for the fixed-time and fixed-route operation is made for the time window close to the on-demand operation and when the fixed-time and fixed-route operation can be substituted by the on-demand operation.

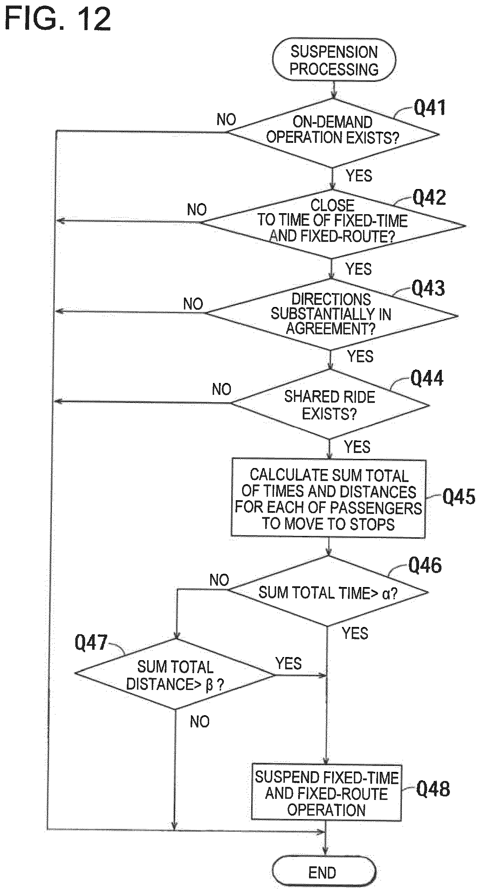

Fig. 12 illustrates another example of the control to suspend the fixed-time and fixed-route operation accompanying the on-demand operation, and corresponds to one example of the control of Fig. 11. Note that in Fig. 12, suppose that all passengers use their houses as the departing locations, in order to simplify the description.

First, Q41-Q43 correspond to Q61-Q63 of Fig. 11. At Q44, it is determined whether the on-demand operation includes a shared ride. If the determination at Q44 is YES, for the passenger (user) who first made the boarding reservation for the on-demand operation, and other passengers who want to share the ride, a required time (time on foot) and a distance from his/her house to the nearest stop are calculated, as well as a sum total time of the required times, and a sum total distance of the distances are calculated, at Q45. This processing is adding the required times and distances for the passengers to move the paths α1-α3 from their houses to the nearby stops in Fig. 2 (as described above, the required time and the distance to the nearby stop for each passenger are registered beforehand).

At Q46 after Q45, it is determined whether the sum total time is longer than a given preset time α (e.g., about 20 minutes). If the determination at Q46 is NO, it is determined at Q47 whether the sum total distance is longer than a given preset distance β (e.g., about 2 km).

If the determination at Q46 is YES, or if the determination at Q47 is YES, a processing to suspend the fixed-time and fixed-route operation scheduled in a time window near the on-demand operation is performed at Q48 (corresponding to Q69 of Fig. 11). On the other hand, if the determination at Q47 is NO, the processing ends without performing Q48 (no suspension of the fixed-time and fixed-route operation). In the suspension processing of the fixed-time and fixed-route operation at Q48, the information on the fixed-time and fixed-route operation to be suspended is transmitted to the user terminal U3, and the same information is transmitted to the driver terminal U4 of the driver who is scheduled to be in charge of the fixed-time and fixed-route operation to be suspended and the in-vehicle terminal U5 of the fixed-time and fixed-route operation to be suspended. A command of this transmission may be performed automatically from the control site U1, or may be performed by operating the administrative terminal U2.

The example of Fig. 12 is configured in consideration of a user who would be particularly inconvenienced by using the fixed-time and fixed-route operation, and the fixed-time and fixed-route operation may not be substituted by the on-demand operation. However, also in the example of Fig. 12, the fixed-time and fixed-route operation can instead be substituted by the on-demand operation. If not preliminarily substituting the fixed-time and fixed-route operation by the on-demand operation, it is desirable to positively guide the passengers who want to use the fixed-time and fixed-route operation to the on-demand operation. In detail, if the passengers who made the boarding reservations of the fixed-time and fixed-route operation exists, it is desirable to preferentially solicit the passengers who made the boarding reservations of the fixed-time and fixed-route operation for a shared ride of the on-demand operation to replace the boarding reservations of the fixed-time and fixed-route operation by the on-demand operation. In addition, after the passengers who made the boarding reservations of the fixed-time and fixed-route operation are solicited for sharing a ride of the on-demand operation, a guidance for soliciting all other user terminals for a shared ride of the on-demand operation may also be transmitted (a transmission from the control site U1 to the user terminal U3 by operating the administrative terminal U2). In the example of Fig. 12, although the determinations at Q46 and Q47 are mutually in an OR relationship, they may be in an AND relationship. That is, if the determination at Q46 is YES and also the determination at Q47 is YES, the processing may shift to Q48. Moreover, the processings at Q65-Q70 in Fig. 11 and the processings at Q44-Q48 in Fig. 12 may suitably be combined.

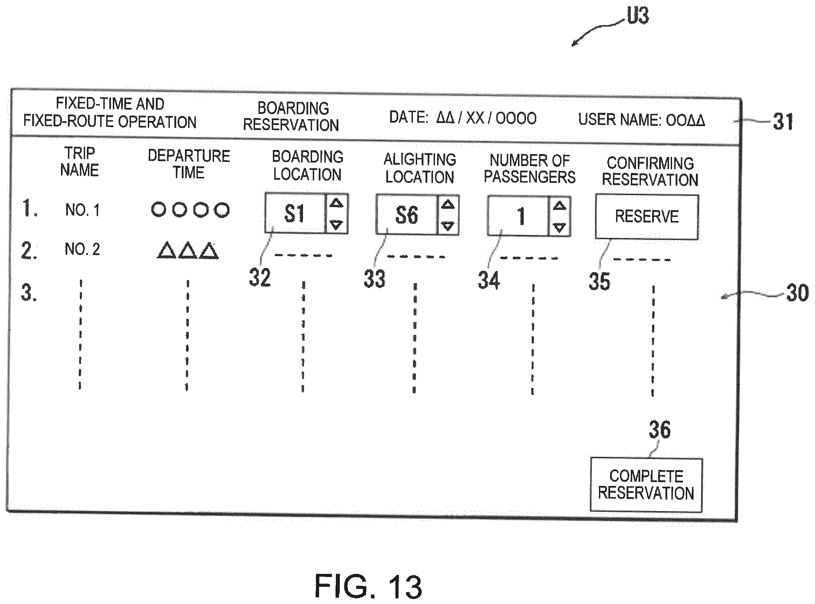

Next, with reference to Figs. 13 to 15, specific examples of the display screen of the user terminal U3 are described for a case where the boarding reservation for the fixed-time and fixed-route operation is made using the user terminal U3, and a case where the fixed-time and fixed-route operation is suspended. Note that a display screen 30 displayed on the touch-panel display device of the user terminal U3 is illustrated in Figs. 13 to 15. Moreover, the following examples correspond to the example of the control in Fig. 11 which substitutes the fixed-time and fixed-route operation by the on-demand operation.

First, Fig. 13 illustrates a fundamental example of the display screen where the boarding reservation for the fixed-time and fixed-route operation is made. By operating the user terminal U3 to transmit to the control site U1 information indicating that the boarding reservation for the fixed-time and fixed-route operation is made, the display screen 30 is displayed as illustrated in Fig. 13, as a reply of the transmission. A classification of the operation being a boarding reservation for the fixed-time and fixed-route operation, a date of the operation to be reserved (a date on which the fixed-time and fixed-route operation is used), and a user name are displayed in a display field 31 on the display screen 30. Note that when the boarding reservation is confirmed, the boarding reservation is made in association with the displayed user name.

In the display screen 30, while trip names of the fixed-time and fixed-route operation (No. 1, No. 2,...) are displayed, a departure time (a departure time from the stop S1 in this embodiment) is displayed for each trip. Moreover, for each trip, a button indication 32 for selecting a boarding location, a button indication 33 for selecting an alighting location, a button indication 34 for selecting the number of passengers, and a button indication 35 for selecting "making a reservation" are displayed.

The selections of the boarding location and the alighting location are made from the stops S1-S7. That is, in the example of No. 1, by operating an arrow up button or an arrow down button in the button indication 32 for selecting the boarding location, the stop displayed in the button indication 32 is changed sequentially. For No. 1, a state where the boarding location is set as the stop S1 is illustrated in Fig. 13. By similar operations, the alighting location is selected (a state where the stop S6 is selected as the alighting location in No. 1), and the number of passengers is selected (a state where "one person" is selected is illustrated in No. 1). By confirming the displayed contents of the button indications 32-34 and operating the button indication 35 for making the boarding reservation, the boarding reservation corresponding to the displayed contents is made for No. 1.

A plurality of boarding reservations are possible at the same time, and, for example, a boarding reservation for a return trip can similarly be made. After all the boarding reservations are made, a button indication 36 is operated to complete the reservations. By operating the button indication 36, the contents of the boarding reservations are transmitted from the user terminal U3 to the control site U1.

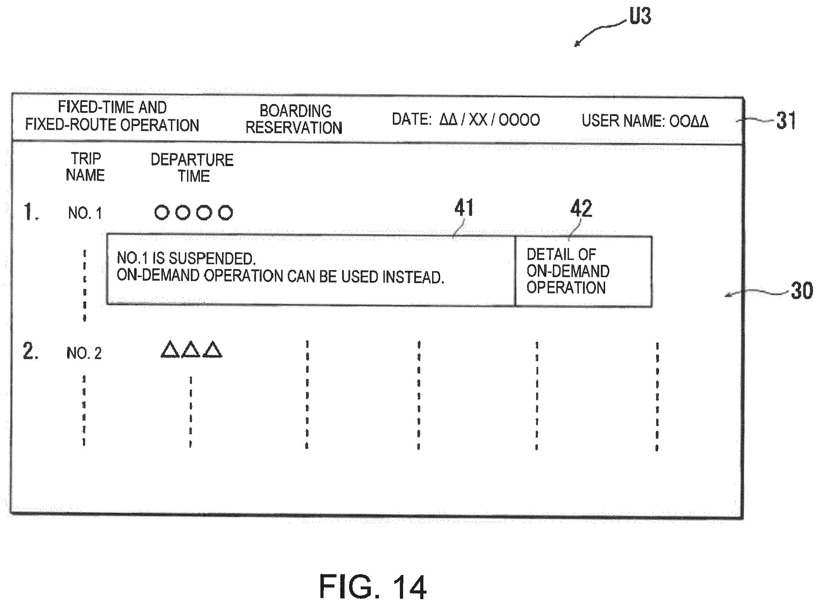

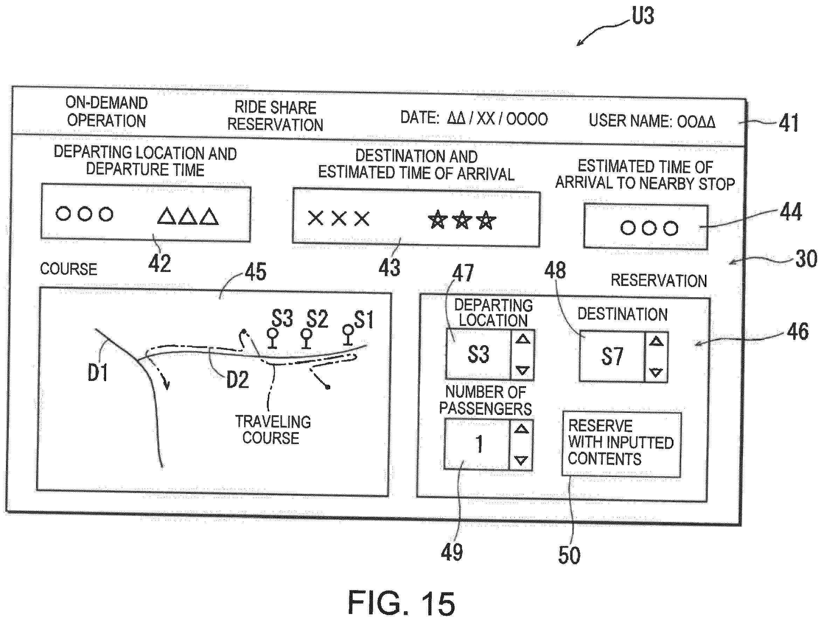

Fig. 14 illustrates one display example of a case where the fixed-time and fixed-route operation is suspended in connection with the on-demand operation. Fig. 14 is a display screen replacing the display screen of Fig. 13 in this case, when a boarding reservation for the fixed-time and fixed-route operation is made. In Fig. 14, a case where No. 1 is suspended is illustrated, and, although there is an indication of No. 1, since this trip is suspended, the boarding location, the alighting location, the number of passengers, and the button indications for making a boarding reservation (32-35 of Fig. 13) are not displayed. Instead, in a display field 41, for example, "No. 1 is suspended. An on-demand operation can be used instead." is displayed. Moreover, a button indication 42 is for demanding "The details of on-demand operation." By operating the button indication 42, the displayed contents in the display screen 30 is changed as illustrated in Fig. 15.

In Fig. 15, for example, the detailed contents of the on-demand operation are displayed as follows. In the display field 41, information, such as the operation being an on-demand operation, is displayed. In the display field 42, a departing location and a departure time are displayed. In a display field 43, a destination (the final stop of the fixed-time and fixed-route operation in this embodiment) and an estimated time of arrival to the destination are displayed. In a display field 44, an estimated time of arrival to a nearby stop from the house of the user who operates the user terminal U3 is displayed. In a display field 45, a traveling course (illustrated by a broken line) is displayed on a map. Note that since there is a boarding reservation to get on the vehicle at the stop S1, a traveling course going through the stop S1 is illustrated in Fig. 15, but if there is no boarding reservation to get on at the stop S1, the course to go through the stop S1 is not necessary. Moreover, when the on-demand operation is permitted to go through the house of the user who shares the ride, an estimated time of arrival at the house is used instead of the estimated time of arrival at the nearby stop.

When the user who understood the contents of the on-demand operation makes a boarding reservation for the on-demand operation (shares the ride), the displayed contents in a display field 46 are adjusted. That is, the departing location is selected by operating a button indication 47 in the display field 46. A selection of the departing locations includes the house, other than the stops S1-S7, for example. The destination is selected by operating a button indication 48. The number of passengers is selected by operating a button indication 49. After selections using the button indications 47-49 are finished, the information indicating that the on-demand operation is to be shared is transmitted to the control site U1 along with the contents of the reservation by operating a button indication 50.

Note that since it is the on-demand operation as a replacement of the fixed-time and fixed-route operation, the departing location and the destination of the user who wants to share the ride illustrated in Fig. 15 can also be limited to the stops S1-S7. Though it is the replacement of the fixed-time and fixed-route operation, it is still an on-demand operation. Therefore, giving priority to the user's trip, the departing location and the destination can be freely selected within an area which is not separated more than a given distance from the traveling course of the fixed-time and fixed-route operation (e.g., the departing location and the destination can be selected by touching a desired location on the displayed traveling course of the on-demand operation).

Although the embodiment is described above, the present disclosure is not limited to the embodiment, and is changeable within the scope of the claims.
(1) Although the operation vehicle (and the driver) used for the outward trip of the fixed-time and fixed-route operation can also be used as an operation vehicle (and a driver) for a return trip as it is, the operation vehicle of the outward trip may be different from the operation vehicle of the return trip.
(2) The suspension condition for suspending the fixed-time and fixed-route operation in connection with the activation of the on-demand operation may be set suitably without being limited to the cases illustrated in Figs. 11 and 12. For example, the processing at Q45-Q47 in Fig. 12 may be omitted (when the determination at Q44 becomes YES, it becomes the processing to suspend the fixed-time and fixed-route operation).
(3) When accepting the shared ride (corresponding to Q52 of Fig. 10), this processing may initially be applied to a user (passenger) who made a boarding reservation for the fixed-time and fixed-route operation scheduled to be operated near the operating time window of the on-demand operation. In this case, by the user who made the boarding reservation for the fixed-time and fixed-route operation showing his/her request for sharing the ride by the on-demand operation, the boarding reservation for the fixed-time and fixed-route operation may be omitted. Moreover, to the passenger who made the boarding reservation for the fixed-time and fixed-route operation, an instruction indicating that the passenger should change the ride to the on-demand operation which operates in a close time window may be issued to suspend the fixed-time and fixed-route operation. Especially, when the number of passengers who use the fixed-time and fixed-route operation is few, such as one or two, the operation load can be reduced by changing to the use of the on-demand operation.
(4) In terms of automation, the control site U1 is desirable to be configured so that exchanges of the information can be performed automatically with other terminals U2-U5 (e.g., when certain information is inputted, output information corresponding to this is transmitted automatically to other terminals U2-U5). However, by positively using the administrative terminal U2, the control site U1 may be simplified as much as possible, and therefore, the installation cost thereof may be red uced.
(5) While the display device of the in-vehicle terminal may be disposed on an instrument panel of the operation vehicle, the user interface of the in-vehicle terminal may be configured to be a commander switch provided, for example, to or near a console box (a commander switch is used to move a cursor on the display screen and perform a selection). Moreover, the driver terminal and the in-vehicle terminal may be combined to be a sole terminal, and in this case, the driver terminal may be installed in the operation vehicle, and/or may be carried outside from the operation vehicle. Further, when providing the driver terminal and the in-vehicle terminal separately, the driver terminal and the in-vehicle terminal are synchronized with each other, and thereby, the information from the control site U1 can be similarly confirmed by both the driver terminal and the in-vehicle terminal.
(6) The step or a group of steps illustrated in the flowcharts can also be expressed as a means (or a function) which acts as the function of the step(s), for example, as a means (or a function) of the control site U1. Of course, the purpose of the present disclosure is not limited to those expressly described, but may implicitly include providing those substantially desirable or expressed as advantages.

The present disclosure can secure transportations in the depopulated districts.

### DESCRIPTION OF REFERENCE CHARACTERS

U1: Control Site (Operation Control Device)
U2: Administrative Terminal (Operation Control Device)
U3: User Terminal
U4: Driver Terminal
U5: In-vehicle Terminal
A1-A3: Village
A4: Event Site
D1-D3: Road
R: Railroad
Ra: Station
S1-S7: Stop (For Fixed-time and Fixed-route Operation)
S8: Stop (For Temporary Fixed-time and Fixed-route Operation)
P1-P3: House of Passenger Who Wants to Use On-demand Operation
α1-α3: Path from House to Nearby Stop

## Claims

1. An automobile operation control system configured to provide a service of a fixed-time and fixed-route operation and an on-demand operation using an operation vehicle, in particular to multiple users (P1-P3) who reside in a given geographical area, comprising:
an operation control device (U2) managed by an operation administrator and comprising a processor (122), configured to:
receive a boarding reservation for the on-demand operation from a first user (P1) of the multiple users (P1-P3); and
suspend, in response to an acceptance of the boarding reservation for the on-demand operation of which a second operation time window is within a given threshold from a first operation time window of the fixed-time and fixed-route operation, the fixed-time and fixed-route operation scheduled to be operated in the first operation time window, when a given condition is satisfied.

2. The system of claim 1,
wherein when accepting the boarding reservation for the on-demand operation, the operation control device (U2) accepts the boarding reservation including information on whether the first user (P1) permits a shared ride, and
wherein the given condition includes at least the first user (P1) permitting the shared ride.

3. The system of claim 1 or 2, wherein the operation control device (U2) uses the reserved on-demand operation also as a replacement operation of the suspended fixed-time and fixed-route operation.

4. The system of any one of the preceding claims,
wherein when determining a traveling course of the reserved on-demand operation, the operation control device (U2) calculates a required time difference that is a time difference between a time required for the reserved on-demand operation and a time required for the fixed-time and fixed-route operation to be suspended if the operation vehicle travels on the determined traveling course, and
wherein the given condition includes the required time difference being less than a given first time difference.

5. The system of any one of the preceding claims,
wherein when determining a traveling course of the reserved on-demand operation, the operation control device (U2) calculates an estimated time-of-arrival difference between an estimated time of arrival at a destination of the on-demand operation and an estimated time of arrival at a destination of the fixed-time and fixed-route operation to be suspended if the operation vehicle travels on the determined traveling course, and
wherein the given condition includes the estimated time-of-arrival difference being less than a given second time difference.

6. The system of any one of the preceding claims, further comprising multiple user terminals (U3) communicable with the operation control device (U2), each including a processor (123), and each corresponding to a respective user of the multiple users (P1-P3)
wherein the operation control device (U2) is further configured to inquire the user terminal (U3) corresponding to the first user (P1), when the boarding reservation for the on-demand operation is accepted, whether a shared ride of the reserved on-demand operation is permitted, and receive a result of the inquiry, and
wherein the operation control device (U2) suspends the fixed-time and fixed-route operation scheduled in the first operation time window on a condition that a second user (P2) who requests to share the ride of the reserved on-demand operation exists.

7. The system of claim 6, wherein when inquiring whether the shared ride of the on-demand operation is permitted, the operation control device (U2) informs the first user (P1), via the corresponding user terminal (U3), information on an operation time and the traveling course of the on-demand operation.

8. The system of claim 6 or 7, wherein when the second user (P2) has made a boarding reservation for the fixed-time and fixed-route operation, the operation control device (U2) preferentially inquires the user terminal (U3) corresponding to the second user (P2) whether the second user (P2) wants to share the ride, before inquiring other user terminals (U3).

9. The system of any one of the preceding claims, wherein the given condition includes a sum total of a required time from a first house (H1) of the first user (P1) to a first stop for the fixed-time and fixed-route operation located nearest to the first house (H1), and a required time from a second house (H2) of the second user (P2) to a second stop for the fixed-time and fixed-route operation located nearest to the second house (H2) being more than a given time.

10. The system of any one of the preceding claims, wherein the given condition includes a sum total of a distance from a first house (H1) of the first user (P1) to a first stop for the fixed-time and fixed-route operation located nearest to the first house (H1), and a distance from a second house (H2) of the second user (P2) to a second stop for the fixed-time and fixed-route operation located nearest to the second house (H2) being more than a given distance.

11. The system of any one of the preceding claims, wherein the given condition includes a direction of a destination of the reserved on-demand operation being substantially in agreement with a direction of a destination of the fixed-time and fixed-route operation to be suspended.

12. The system of any one of the preceding claims, further comprising a plurality of driver terminals (U4) communicatable with the operation control device (U2), each comprising a processor (124), and each corresponding to a respective one of a plurality of drivers in charge of driving at least the fixed-time and fixed-route operation,
wherein the operation control device (U2) is further configured to inform, via the corresponding driver terminal (U4), a driver of the plurality of drivers who is scheduled to be in charge of driving the fixed-time and fixed-route operation to be suspended, that the fixed-time and fixed-route operation is suspended.

13. A method of operating a vehicle, comprising the steps of:
providing a service of a fixed-time and fixed-route operation and an on-demand operation using an operation vehicle in particular to multiple users (P1-P3) who reside in a given geographical area,
receiving a boarding reservation for the on-demand operation from a first user (P1) of the multiple users (P1-P3), and
suspending, in response to an acceptance of the boarding reservation for the on-demand operation of which a second operation time window is within a given threshold from a first operation time window of the fixed-time and fixed-route operation, the fixed-time and fixed-route operation scheduled to be operated in the first operation time window, when a given condition is satisfied.

14. The method of claim 13,
wherein when accepting the boarding reservation for the on-demand operation, the boarding reservation includes information on whether the first user (P1) permits a shared ride or not, and
wherein the given condition includes at least the permit of the first user (P1) for the shared ride, and/or
the reserved on-demand operation is also used as a replacement operation of the suspended fixed-time and fixed-route operation.

15. A computer program product comprising computer-readable instructions, which when loaded and executed on a suitable system, can perform the steps of any method of claims 13 or 14.
